# FASCICULE DE BREVET EUROPEEN

(11) **EP 4 359 262 B1**
(45) Date de publication et mention de la délivrance du brevet: **06.08.2025**
(21) Numéro de dépôt: 22733660.9
(22) Date de dépôt: 20.06.2022
(51) Int. Cl.: B60R 13/04, B60J 10/235, B60J 10/78

(54) **PROCÉDÉ DE TRANSFORMATION D'UNE PREMIÈRE VERSION D'UN VÉHICULE EN UNE DEUXIÈME VERSION**
VERFAHREN ZUM UMFORMEN EINER ERSTEN VERSION EINES FAHRZEUGS IN EINE ZWEITE VERSION
METHOD FOR TRANSFORMING A FIRST VERSION OF A VEHICLE INTO A SECOND VERSION

(30) Priorité: 24.06.2021 FR 2106739
(43) Date de publication de la demande: 01.05.2024
(73) Titulaire: Renault s.a.s, 92100 Boulogne Billancourt (FR)
(72) Inventeur: CHAPRON, Thibaut, 78288 GUYANCOURT (FR)
(86) Numéro de dépôt international: PCT/EP2022/066724
(87) Numéro de publication internationale: WO 2022/268714

(56) Documents cités:
- EP-A1- 0 581 389
- EP-A1- 2 353 909
- WO-A1-01/34933
- FR-A1- 2 928 872
- FR-A1- 2 979 292

## Description

La présente invention concerne un procédé de transformation d'une première version d'un véhicule en une deuxième version. De façon plus précise, ces deux versions se différencient l'une de l'autre par quelques détails de finition, mais conservent une même base commune.

Pour rappel, certains véhicules comprennent deux façades latérales comportant chacune une portière avant, une portière arrière, un côté de caisse et une custode, ladite custode étant placée derrière ladite portière arrière. Cette custode est représentée par une vitre de petite dimension relativement à celles des portières, et est montée de façon fixe sur la façade latérale. Le côté de caisse qui est représenté schématiquement par une pièce emboutie, entoure la custode, et se prolonge au-dessus de la portière arrière et de la portière avant pour se terminer en partie basse d'un montant délimitant un pare-brise avant.

Certains constructeurs souhaitent décliner deux versions d'un véhicule :
- une première version plutôt « entrée de gamme » pour laquelle il n'y a pas de ligne de chrome sur les coulisses supérieures des vitres des portières du même côté de caisse, impliquant pour des questions d'esthétique qu'il n'y ait pas une ligne de chrome sur un bord supérieur de la custode,
- une deuxième version plutôt « haut de gamme » pour laquelle il existe une ligne de chrome sur les coulisses supérieures des deux portières d'un même côté de caisse, impliquant pour des questions d'esthétique, qu'il existe une ligne de chrome sur un bord supérieur de la custode. En effet, afin de respecter une certaine homogénéité sur un côté de caisse, il est souhaitable qu'une ligne de chrome sur le bord supérieur de la custode prolonge les lignes de chromes des coulisses supérieures des vitres des deux portières dudit côté de caisse.

Pour ces deux versions de véhicule, le bord supérieur de la custode avec ou sans la ligne de chrome, doit absolument affleurer le côté de caisse dans lequel elle est montée, à la fois pour des questions d'esthétisme et d'aérodynamique.

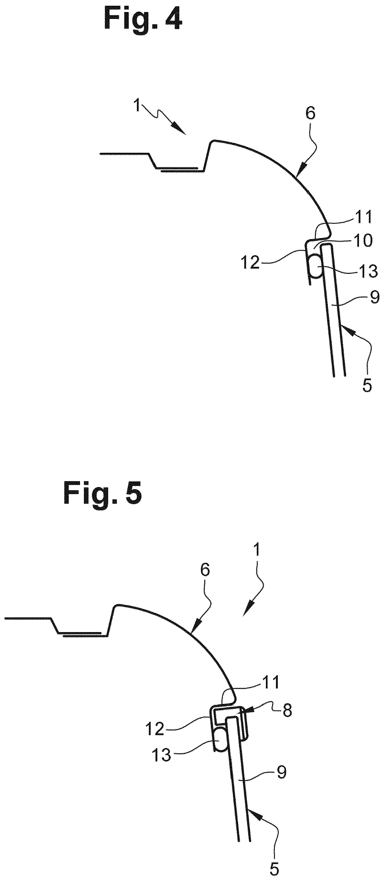

Or, actuellement, en se référant aux figures 4 et 5, si l'on conserve un même côté de caisse pour les deux versions du véhicule, l'une desdites versions sera obligatoirement lésée. En effet, si pour la première version, on rend affleurante la vitre de custode avec le côté de caisse comme illustré à la figure 4, l'ajout d'une ligne de chrome sur ladite vitre pour obtenir la deuxième version, va engendrer un débord extérieur de la ligne de chrome sur le côté de caisse, comme illustré à la figure 5. Inversement, on peut aisément imaginer, que si la ligne de chrome était montée affleurante avec le côté de caisse pour obtenir la deuxième version du véhicule, le retrait de cette ligne de chrome pour obtenir la première version engendrerait une position enfoncée de la vitre de la custode par rapport au côté de caisse. Actuellement, il est donc impossible de conserver le même côté de caisse pour obtenir les deux versions du véhicule, liées à la présence ou non d'une ligne de chrome sur un bord supérieur de la vitre de custode.

Un procédé selon l'invention permet d'obtenir deux versions différentes d'un même véhicule, liées à la présence ou non d'une ligne de chrome sur le bord supérieur d'une custode, en conservant le même côté de caisse pour les deux versions.

Afin de bien comprendre le positionnement des différentes pièces impliquées dans un véhicule selon l'invention, la description est réalisée en faisant référence à un repère orthonormé direct XYZ lié au véhicule et dans lequel X est un axe longitudinal avant-arrière du véhicule orienté vers l'arrière, Y est un axe transversal orienté vers la droite du véhicule et Z est un axe vertical dirigé vers le haut.

L'invention a pour objet un procédé de transformation d'une première version d'un véhicule en une deuxième version, ledit véhicule comprenant un côté de caisse possédant un renfoncement délimité par une feuillure matérialisant le fond du renfoncement et par une paroi supérieure matérialisant une profondeur dudit renfoncement, dans la première version le véhicule comprenant une vitre de custode montée sur une zone de la feuillure du renfoncement au moyen d'un joint, de sorte que la vitre affleure le côté de caisse. FR 2 979 292 A1 divulgue un art antérieur d'un procédé de transformation d'une première version d'un véhicule en une deuxième version selon le préambule de la revendication 1.

Selon l'invention, le procédé comprend les étapes suivantes :
--une étape de montage de la vitre de custode sur une autre zone de la feuillure au moyen du joint, de sorte que la vitre se retrouve plus éloignée de la paroi supérieure qu'elle ne l'était dans la première version, et de sorte que ladite vitre affleure le côté de caisse,

- une étape de fourniture d'un enjoliveur chromé,
- une étape de fixation de l'enjoliveur chromé sur la feuillure dans un espace compris entre la vitre et la paroi supérieure de l'enfoncement, de sorte que ledit enjoliveur affleure le côté de caisse.

Le principe d'un procédé selon l'invention est de pouvoir passer d'une première version d'un véhicule à une deuxième version dudit véhicule qui est bien distincte de la première version, en conservant le même côté de caisse. En effet, pour passer de la première version « sans enjoliveur sur la vitre de custode » à la deuxième version « avec enjoliveur sur la vitre de custode », il n'y a pas lieu d'effectuer des modifications structurelles en profondeur du côté de caisse. Celui-ci conserve la même forme et les mêmes dimensions d'une version à l'autre. Grâce à cette communauté du côté de caisse entre les deux versions, il n'est donc pas nécessaire de concevoir et de développer un outillage spécifique pour chaque version permettant par exemple d'emboutir de façon particulière ce côté de caisse. Il en résulte qu'il apparait facile et rapide de passer d'une version à l'autre, engendrant de grandes économies pour la fabrication de ces deux versions. Le passage d'une version à l'autre est réalisée grâce à un agencement judicieux d'un enjoliveur chromé avec la vitre de custode, permettant à cet enjoliveur d'affleurer ladite vitre, ledit enjoliveur et ladite vitre affleurant le côté de caisse. L'enjoliveur et la vitre de custode sont placés dans la continuité l'un de l'autre sur une feuillure dudit côté de caisse, et sans se chevaucher. L'enjoliveur chromé est assimilable à une baguette allongée coiffant un bord supérieur de la vitre de custode. Le renfoncement permet d'insérer la vitre de custode de manière à ce que ladite vitre n'émerge pas vers l'extérieur du côté de caisse.

Selon une caractéristique possible de l'invention, le procédé comprend une étape de rallongement de la feuillure pour permettre d'éloigner de la paroi supérieure de l'enfoncement, la zone de fixation de la vitre sur la feuillure au moyen du joint. La principale différence entre la première version et la deuxième version du véhicule, est que dans ladite deuxième version, la vitre de custode est plus éloignée de la paroi supérieure de l'enfoncement, de façon à créer un espace libre sur la feuillure destiné à recevoir l'enjoliveur chromé. Cette notion d'éloignement s'entend sur la section de finition en elle-même. La vitre de custode est globalement plus petite sur l'ensemble de la vitre.

Selon une caractéristique possible de l'invention, l'étape de fourniture de l'enjoliveur chromé comprend une étape de fabrication d'un corps principal et une étape de revêtement dudit corps avec une couche ayant un aspect chromé. Il n'est en effet pas nécessaire que l'enjoliveur chromé soit une pièce entièrement chromée. Il suffit seulement qu'une face de l'enjoliveur qui est visible depuis l'extérieur du véhicule soit chromée.

Selon une caractéristique possible de l'invention, le corps principal est en matière plastique. L'enjoliveur étant une pièce de garniture uniquement destinée à améliorer l'esthétique du véhicule, et donc sans remplir de fonction particulière, il n'est pas nécessaire qu'elle soit lourde et/ou qu'elle présente une résistance mécanique élevée.

Selon une caractéristique possible de l'invention, l'étape de fixation de l'enjoliveur chromé sur la feuillure s'effectue au moyen d'une couche d'adhésif. Puisque l'enjoliveur est une pièce légère, une fixation de celui-ci sur la feuillure par collage, est une technique suffisante pour bien solidariser l'enjoliveur à ladite feuillure.

Selon une caractéristique possible de l'invention, le procédé comprend une étape de fixation de plusieurs agrafes sur la feuillure disposées le long de l'enjoliveur, pour sécuriser la tenue dudit enjoliveur et garantir que la couche d'adhésif reste bien compressée lors du montage. Ces agrafes servant d'élément de maintien pour l'enjoliveur de façon à assurer une bonne tenue dudit enjoliveur et une bonne compression de la couche d'adhésif, sont cachées derrière la vitre de custode et l'enjoliveur, et ne sont donc pas visibles depuis l'extérieur du véhicule. Ces agrafes sont préférentiellement placées sous l'enjoliveur chromé pour le soutenir.

Selon une caractéristique possible de l'invention, le procédé comprend une étape de réalisation de plusieurs cavités dans l'enjoliveur chromé, de manière à pouvoir loger les agrafes qui se rétractent en force contre la vitre de la custode lorsque l'enjoliveur est fixé sur la feuillure. Ces cavités servent à loger ces agrafes afin de les empêcher d'émerger et donc de devenir visibles.

Selon une caractéristique possible de l'invention, l'étape de fixation de l'enjoliveur chromé sur la feuillure est réalisée en laissant subsister un jeu entre la paroi supérieure du renfoncement et ledit enjoliveur.

Selon une caractéristique possible de l'invention, la paroi du renfoncement s'étend dans un plan sensiblement horizontal et la feuillure s'étend dans un plan sensiblement vertical. Ces notions de vertical et horizontal sont à considérer comme si le véhicule reposait sur un sol horizontal. Le terme « sensiblement » signifie à plus ou moins 20°près.

L'invention a pour autre objet un ensemble comprenant une première version de véhicule et une deuxième version de véhicule obtenue au moyen d'un procédé conforme à l'invention.

Selon l'invention,
- la première version du véhicule comprend un côté de caisse possédant un renfoncement et une vitre de custode montée sur une zone de la feuillure du renfoncement au moyen d'un joint, de sorte que la vitre affleure le côté de caisse, et,
- la deuxième version dudit véhicule comprend le même côté de caisse que celui de la première version du véhicule, la vitre de custode, plus petite, étant montée sur une autre zone plus basse de la feuillure du renfoncement au moyen du joint, de sorte que la vitre affleure le côté de caisse, un enjoliveur chromé étant fixé à ladite feuillure dans la continuité de ladite vitre de façon à affleurer le côté de caisse, ledit enjoliveur étant inséré entre la vitre de custode et la paroi supérieure du renfoncement.

Un procédé selon l'invention présente l'avantage de passer d'une première version d'un véhicule se traduisant par l'absence d'un enjoliveur chromé sur une vitre de custode, à une deuxième version dudit véhicule se traduisant par la présence de cet enjoliveur chromé, sans avoir à modifier structurellement le côté de caisse. Il en résulte qu'en conservant le même côté de caisse entre les deux versions du véhicule, le procédé est simplifié et est plus rapide à mettre en œuvre, avec à la clé, de grandes économies effectuées. Il a de plus l'avantage d'être facilement réversible, en raison d'un côté de caisse commun entre les deux versions du véhicule.

On donne ci-après une description détaillée d'un mode de réalisation préféré d'un procédé de transformation selon l'invention, en se référant aux figures suivantes :
[Fig. 1] représente une vue de côté d'un véhicule de l'état de la technique montrant un côté de caisse,
[Fig. 2] représente une vue de côté de la première version d'un véhicule selon l'invention, la vitre de custode étant dépourvue d'un enjoliveur chromé,
[Fig. 3] représente une vue de côté de la deuxième version d'un véhicule selon l'invention, la vitre de custode étant dotée d'un enjoliveur chromé,
Fig. 4] représente une vue en coupe dans un plan vertical et transversal YZ d'un côté de caisse d'une première version d'un véhicule de l'état de la technique, la vitre de custode étant dépourvue d'un enjoliveur chromé,
[Fig. 5] représente une vue en coupe dans un plan vertical et transversal YZ d'un côté de caisse d'une deuxième version d'un véhicule de l'état de la technique, la vitre de custode étant dotée d'un enjoliveur chromé,
[Fig. 6] représente une vue en coupe dans un plan YZ du véhicule d'une zone du côté de caisse d'un véhicule selon l'état de la technique,
[Fig. 7] représente une vue en coupe dans un plan vertical et transversal YZ d'un côté de caisse d'une première version d'un véhicule selon l'invention, la vitre de custode étant dépourvue d'un enjoliveur chromé,
[Fig. 8] représente une vue en coupe dans un plan vertical et transversal YZ d'un côté de caisse d'une deuxième version d'un véhicule selon l'invention, la vitre de custode étant dotée d'un enjoliveur chromé.

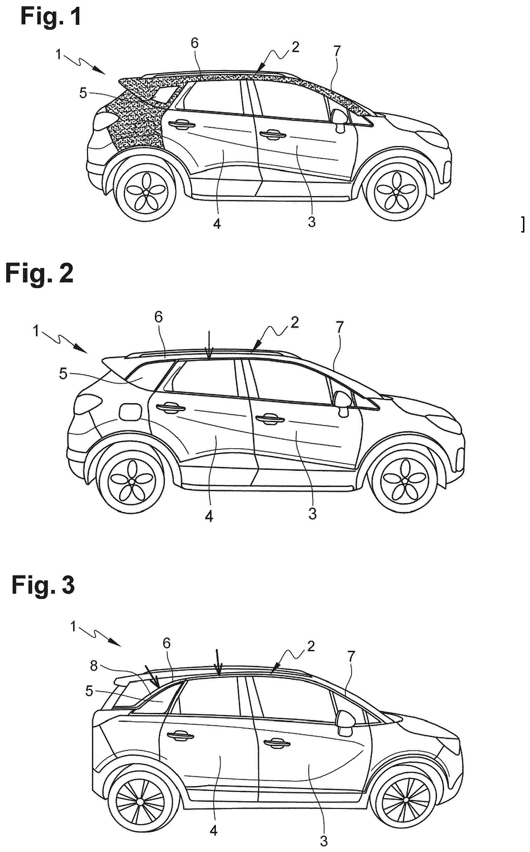

En se référant aux figures 1, 2 et 3, certains véhicules 1 comprennent deux façades latérales 2 parallèles, possédant chacune une portière avant 3, une portière arrière 4 et une custode 5 placée derrière la portière arrière 4.

En se référant à la figure 1, chacune de ces deux façades 2 latérales, s'inscrit dans un plan vertical et longitudinal XZ du véhicule 1, et comporte un côté de caisse 6 constitué par une pièce emboutie entourant la custode 5 et s'étendant vers l'avant depuis ladite custode 5 en passant au-dessus de la portière arrière 4 et de la portière avant 3, pour se terminer à la base d'un montant encadrant un pare-brise 7. Pour rappel, la custode 5 est une vitre fixe de petite dimension par rapport à celle des vitres portées par la portière arrière 4 et la portière avant 3, et qui est fixée dans le côté de caisse 6 derrière la portière arrière 4.

Certains de ces véhicules 1 peuvent se décliner :
- en une première version pour laquelle les vitres de la portière arrière 4 et de la portière avant 3, ainsi que de la custode 5, sont dépourvues d'un enjoliveur chromé supérieur comme illustré à la figure 2, et
- en une deuxième version comme illustrée à la figure 3, et pour laquelle les vitres de la portière arrière 4 et de la portière avant 3, ainsi que de la custode 5, sont dotées d'un enjoliveur supérieur chromé 8. Cet enjoliveur 8 est schématiquement représenté par une baguette chromée, solidarisée au côté de caisse 6 et qui vient se placer juste au-dessus d'un bord supérieur des vitres de la portière avant 3, de la portière arrière 4 et de la custode 5.

Or, actuellement, le passage de la première version du véhicule 1 à la deuxième version, ou vice versa, nécessite une modification du côté de caisse 6.

En effet, en se référant à la figure 4 matérialisant une vue en coupe de la custode 5 et d'un côté de caisse 6 d'une première version d'un véhicule 1 de l'état de la technique, la vitre 9 de la custode 5 est montée en étant affleurante avec le côté de caisse 6. En effet, le côté de caisse 6 comprend un renfoncement 10 délimité par une paroi supérieure 11 et par une feuillure 12, et lorsque le véhicule repose sur un sol horizontal, ladite paroi supérieure 11 s'étend dans un plan sensiblement horizontal et la feuillure 12 s'étend dans un plan sensiblement vertical, le terme « sensiblement » signifiant « à plus ou moins 20° ». La vitre 9 de custode 5 est solidarisée à la feuillure 12 du renfoncement 10 par l'intermédiaire d'un joint 13, et s'étend dans un plan sensiblement vertical et longitudinal XZ du véhicule en affleurant le côté de caisse 6. Une fois montée sur le véhicule 1, la vitre 9 de custode 5 ménage un espace avec la paroi supérieure 11 du renfoncement.

En se référant à la figure 5, si un enjoliveur chromé 8 était placé sur la custode 6 pour obtenir la deuxième version du véhicule 1de l'état de la technique, sans changer le côté de caisse 6, il saillirait dudit côté de caisse 6 vers l'extérieur du véhicule 1. En effet, en partant de la première version du véhicule ci-avant décrite, cet enjoliveur chromé 8 serait surmoulé sur un bord supérieur de la vitre 9 de custode 5, en chevauchant ledit bord supérieur. Cet enjoliveur 8 créerait alors une surépaisseur de part et d'autre de la vitre 9 de custode 5, une première surépaisseur 14 venant se placer entre la feuillure 12 et la vitre 9, et une deuxième surépaisseur 15 chromée étant placée contre une face externe de la vitre 9. Cette deuxième surépaisseur 15 saillirait alors du côté de caisse 6 vers l'extérieur du véhicule 1, une telle situation étant jugée inacceptable.

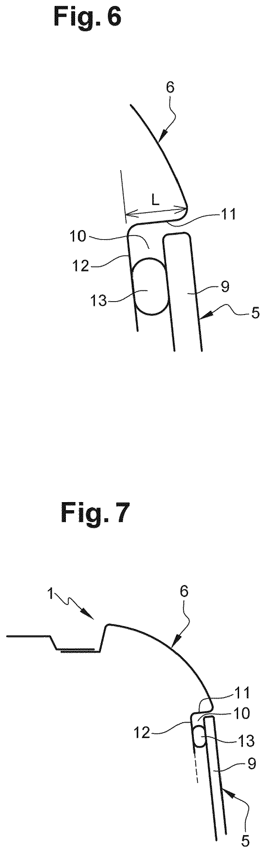

En se référant à la figure 6, pour éviter que l'enjoliveur chromé 8 ne saille vers l'extérieur du côté de caisse 6, il faudrait créer un nouveau côté de caisse 6, en jouant notamment sur la profondeur « L » du renfoncement 10, afin que l'enjoliveur chromé soit complètement inclus dans ledit renfoncement 10 et affleure ledit côté de caisse 6.

Un procédé selon l'invention permet de passer de la première version du véhicule 1 à la deuxième version de celui-ci, ou vice versa, en évitant d'avoir à fabriquer un nouveau côté de caisse 6 pour changer de version de véhicule 1. Autrement dit, le principe d'un procédé selon l'invention, est de passer de la première version à la deuxième version du véhicule, ou vice versa, en conservant le même côté de caisse 6.

En se référant à la figure 7, dans le cadre d'un tel procédé, la première version du véhicule est conservée par rapport à celle d'un véhicule de l'état de la technique, et est analogue à la première version de véhicule précédemment décrite. Pour rappel, la vitre 9 de la custode 5 est fixée à la feuillure 12 du renfoncement 10 du côté de caisse 6, au moyen d'un joint 13, de sorte que ladite vitre arase ledit côté de caisse 6.

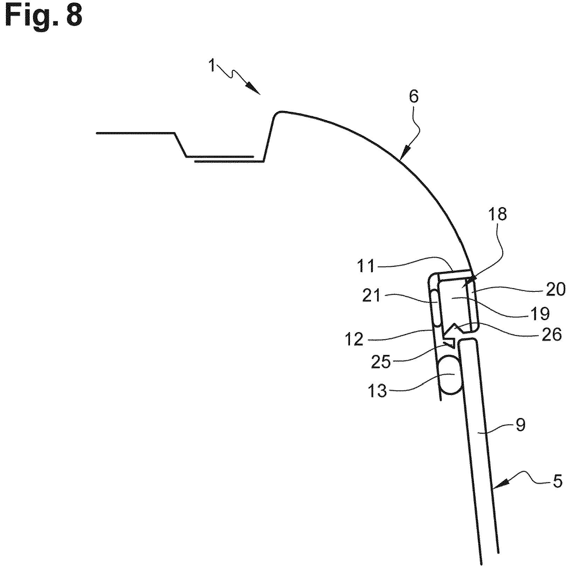

En se référant à la figure 8, dans le cadre d'un procédé selon l'invention, la deuxième version du véhicule est obtenue en suivant les étapes suivantes :
- une étape de rallongement vers le bas de la feuillure 12 du renfoncement 10 du côté de caisse 6,
- une étape de décalage du point de fixation du joint 13 de la vitre 9 de custode 5 sur la feuillure 12 du renfoncement 10. En effet, l'ensemble constitué par la vitre 9 de custode 5 et le joint 13 est décalé vers le bas sur la feuillure 12, en éloignant ledit joint 13 de la paroi supérieure 11 du renfoncement 10, tout en conservant la position relative de ladite vitre 9 par rapport audit joint 13. La vitre 9 de la custode 5 se retrouve donc décalée vers le bas sur la feuillure 12, tout en demeurant dans une position en affleurement avec le côté de caisse 6,
- une étape d'insertion et de fixation de plusieurs agrafes 25 sur la feuillure 12 destinées à soutenir un enjoliveur chromé 18. Ces agrafes 25 sont destinées à être placées sous cet enjoliveur chromé 18 et le long de celui-ci afin d'assurer un bon maintien de celui-ci contre la feuillure 12,
- une étape d'insertion et de fixation de l'enjoliveur chromé 18 dans l'espace créé entre un bord supérieur de la vitre 9 de custode 5 et la paroi supérieure 11 du renfoncement 10, ledit espace résultant du décalage sur la feuillure 12 de l'ensemble constitué par la vitre 9 de custode 5 et le joint 13. Cet enjoliveur chromé 18 comprend un corps principal 19 qui est préférentiellement solidarisé à la feuillure 12 du renfoncement 10 du côté de caisse 6 par une couche d'adhésif 21, et une couche d'aspect 20 chromée qui est déposée sur ledit corps principal 19. Ce corps principal 19 est préférentiellement de forme parallélépipédique allongée, dont une face est collée à la feuillure 12 et dont une face opposée est recouverte par la couche d'aspect 20. Les dimensions de cet enjoliveur 18 chromé sont telles, qu'elles permettent à cet enjoliveur 18 d'affleurer le côté de caisse 6 une fois qu'il a été collé à la feuillure 12. De cette manière, la vitre 9 de custode 5 et l'enjoliveur chromé 18 sont fixés à la feuillure 12 en étant alignés l'un à la suite de l'autre, sans avoir la moindre interaction entre eux et en affleurant tous les deux le côté de caisse 6. L'enjoliveur 18 est placé sur les agrafes 25 qui auront été préalablement fixées à la feuillure 12.
- Une étape de réalisation de plusieurs cavités 26 dans le corps principal 19 de l'enjoliveur 18 et le long de celui-ci, afin de constituer des espaces de logement pour les agrafes 25 qui seront mises sous contrainte lors de la fixation de l'enjoliveur chromé 18 sur la feuillure 12..

L'invention a pour autre objet un ensemble comprenant une première version d'un véhicule 1 et une deuxième version dudit véhicule 1 obtenue au moyen d'un procédé conforme à l'invention.

Selon l'invention,:
- la première version du véhicule 1 comprend un côté de caisse 6 possédant un renfoncement 10 et une vitre 9 de custode5 montée sur une zone de la feuillure 12 du renfoncement 10 au moyen d'un joint 13, de sorte que la vitre 13 affleure le côté de caisse 6, et,
- la deuxième version dudit véhicule comprend le même côté de caisse 6 que celui de la première version du véhicule 1, la vitre 9 de custode 5 étant montée sur une autre zone plus basse de la feuillure 12 du renfoncement 10 au moyen du joint 13, de sorte que la vitre 9 affleure le côté de caisse 6, un enjoliveur chromé 18 étant fixé à ladite feuillure 12 dans la continuité de ladite vitre 9, de façon à affleurer le côté de caisse 6, ledit enjoliveur 18 étant inséré entre la vitre 9 de custode 5 et la paroi supérieur 11 du renfoncement 10.

## Revendications

1. Procédé de transformation d'une première version d'un véhicule (1) en une deuxième version, ledit véhicule (1) comprenant un côté de caisse (6) possédant un renfoncement (10) délimité par une feuillure (12) matérialisant un fond du renfoncement (10) et par une paroi supérieure (11) matérialisant une profondeur dudit renfoncement (10), dans la première version le véhicule (1) comprenant une vitre (9) de custode (5) montée sur une zone de la feuillure (12) du renfoncement (10) au moyen d'un joint (13), de sorte que la vitre (9) affleure le côté de caisse (6), **caractérisé en ce qu'**il comprend les étapes suivantes :
- une étape de montage de la vitre (9) de custode (5) sur une autre zone de la feuillure (12) au moyen du joint (13), de sorte que la vitre (9) se retrouve plus éloignée de la paroi supérieure (11) qu'elle ne l'était dans la première version, et de sorte que ladite vitre (9) affleure le côté de caisse (6),
- une étape de fourniture d'un enjoliveur chromé (18),
- une étape de fixation de l'enjoliveur chromé (18) sur la feuillure (12) dans un espace compris entre la vitre (9) et la paroi supérieure (11) de l'enfoncement (10), de sorte que ledit enjoliveur (18) affleure le côté de caisse (6).

2. Procédé de transformation selon la revendication 1, **caractérisé en ce qu'**il comprend une étape de rallongement de la feuillure (12) pour permettre d'éloigner de la paroi supérieure (11) de l'enfoncement (10), la zone de fixation de la vitre (9) sur la feuillure (12) au moyen du joint (13).

3. Procédé de transformation selon l'une quelconque des revendications 1 ou 2, **caractérisé en ce que** l'étape de fourniture de l'enjoliveur chromé (18) comprend une étape de fabrication d'un corps principal (19) et une étape de revêtement dudit corps (19) avec une couche d'aspect chromé (20).

4. Procédé de transformation selon la revendication 3, **caractérisé en ce que** le corps principal (19) est en matière plastique.

5. Procédé de transformation selon l'une quelconque des revendications 1 à 4, **caractérisé en ce que** l'étape de fixation de l'enjoliveur chromé (18) sur la feuillure (12) s'effectue au moyen d'une couche d'adhésif.

6. Procédé de transformation selon la revendication 5, **caractérisé en ce qu'**il comprend une étape de fixation de plusieurs agrafes (25) sur la feuillure (12) disposées le long de l'enjoliveur (18), pour sécuriser la tenue dudit enjoliveur (18) et garantir que la couche d'adhésif reste bien compressée lors du montage.

7. Procédé de transformation selon la revendication 6, **caractérisé en ce qu'**il comprend une étape de réalisation de plusieurs cavités (26) dans l'enjoliveur chromé (18), de manière à pouvoir loger les agrafes (25) qui se rétractent en force contre la vitre (9) de la custode (5) lorsque l'enjoliveur (18) est fixé à la feuillure (12).

8. Procédé de transformation selon l'une quelconque des revendications 1 à 7, **caractérisé en ce que** l'étape de fixation de l'enjoliveur chromé (18) sur la feuillure (12) est réalisée en laissant subsister un jeu entre la paroi supérieure (11) du renfoncement (10) et ledit enjoliveur (18).

9. Procédé de transformation selon l'une quelconque des revendications 1 à 8, **caractérisé en ce que** la paroi supérieure (11) du renfoncement (10) s'étend dans un plan sensiblement horizontal et la feuillure (12) s'étend dans un plan sensiblement vertical.

10. Ensemble comprenant une première version de véhicule (1) et une deuxième version dudit véhicule (1) obtenue au moyen d'un procédé conforme à l'une quelconque des revendications 1 à 9, **caractérisé en ce que** :
- la première version du véhicule (1) comprend un côté de caisse (6) possédant un renfoncement (10) et une vitre (9) de custode (5) montée sur une zone de la feuillure (12) du renfoncement (10) au moyen d'un joint (13), de sorte que la vitre (13) affleure le côté de caisse (6), et **en ce que**,
- la deuxième version dudit véhicule comprend le même côté de caisse (6) que celui de la première version du véhicule, la vitre (9) de custode (5) plus petite étant montée sur une autre zone plus basse de la feuillure (12) du renfoncement (10) au moyen du joint (10), de sorte que la vitre (9) affleure le côté de caisse (6), un enjoliveur chromé (18) étant fixé à ladite feuillure (12) dans la continuité de ladite vitre (9) de façon à affleurer le côté de caisse (6), ledit enjoliveur (18) étant inséré entre la vitre (9) de custode (5) et la paroi supérieure (12) du renfoncement (10).

## Patentansprüche

1. Verfahren zur Umformung einer ersten Version eines Fahrzeugs (1) in eine zweite Version, wobei das Fahrzeug (1) eine Karosserieseite (6), aufweisend eine Vertiefung (10), umfasst, die durch einen Falz (12), der einen Boden der Vertiefung (10) bildet, und durch eine obere Wand (11), die eine Tiefe der Vertiefung (10) bildet, begrenzt ist, wobei das Fahrzeug (1) in der ersten Version eine Scheibe (9) eines Seitenfensters (5) umfasst, die an einem Bereich des Falzes (12) der Vertiefung (10) mittels einer Dichtung (13) so montiert ist, dass die Scheibe (9) bündig mit der Karosserieseite (6) abschließt, **dadurch gekennzeichnet, dass** es die folgenden Schritte umfasst:
- einen Schritt der Montage der Scheibe (9) des Seitenfensters (5) an einem anderen Bereich des Falzes (12) mittels der Dichtung (13), so dass die Scheibe (9) weiter von der oberen Wand (11) entfernt ist als in der ersten Version und so dass die Scheibe (9) bündig mit der Karosserieseite (6) abschließt,
- einen Schritt des Bereitstellens einer verchromten Zierblende (18),
- einen Schritt der Befestigung der verchromten Zierblende (18) an dem Falz (12) in einem Raum, der zwischen der Scheibe (9) und der oberen Wand (11) der Vertiefung (10) umfasst ist, so dass die Zierblende (18) bündig mit der Karosserieseite (6) abschließt.

2. Verfahren zur Umformung nach Anspruch 1, **dadurch gekennzeichnet, dass** es einen Schritt zum Verlängern des Falzes (12) umfasst, um den Bereich der Befestigung der Scheibe (9) an dem Falz (12) mittels der Dichtung (13) von der oberen Wand (11) der Vertiefung (10) weg zu entfernen.

3. Verfahren zur Umformung nach einem der Ansprüche 1 oder 2, **dadurch gekennzeichnet, dass** der Schritt zum Bereitstellen der verchromten Zierblende (18) einen Schritt zum Herstellen eines Hauptkörpers (19) und einen Schritt zum Beschichten des Körpers (19) mit einer Schicht mit Chromoptik (20) umfasst.

4. Verfahren zur Umformung nach Anspruch 3, **dadurch gekennzeichnet, dass** der Hauptkörper (19) aus Kunststoff besteht.

5. Verfahren zur Umformung nach einem der Ansprüche 1 bis 4, **dadurch gekennzeichnet, dass** der Schritt des Befestigens der verchromten Zierblende (18) an dem Falz (12) mittels einer Klebeschicht erfolgt.

6. Verfahren zur Umformung nach Anspruch 5, **dadurch gekennzeichnet, dass** es einen Schritt zum Befestigen mehrerer Klammern (25) an dem Falz (12) umfasst, die entlang der Zierblende (18) angeordnet sind, um den Halt der Zierblende (18) zu sichern und zu gewährleisten, dass die Klebeschicht bei der Montage gut zusammengedrückt bleibt.

7. Verfahren zur Umformung nach Anspruch 6, **dadurch gekennzeichnet, dass** es einen Schritt zum Herstellen mehrerer Hohlräume (26) in der verchromten Zierblende (18) umfasst, so dass die Klammern (25) aufgenommen werden können, die sich mit Kraft gegen die Scheibe (9) des Seitenfensters (5) zurückziehen, wenn die Zierblende (18) an dem Falz (12) befestigt wird.

8. Verfahren zur Umformung nach einem der Ansprüche 1 bis 7, **dadurch gekennzeichnet, dass** der Schritt zum Befestigen der verchromten Zierblende (18) an dem Falz (12) so durchgeführt wird, dass zwischen der oberen Wand (11) der Vertiefung (10) und der Zierblende (18) ein Spielraum verbleibt.

9. Verfahren zur Umformung nach einem der Ansprüche 1 bis 8, **dadurch gekennzeichnet, dass** die obere Wand (11) der Vertiefung (10) in einer im Wesentlichen horizontalen Ebene verläuft und der Falz (12) in einer im Wesentlichen vertikalen Ebene verläuft.

10. Anordnung, umfassend eine erste Version eines Fahrzeugs (1) und eine zweite Version des Fahrzeugs (1), die mittels eines Verfahrens nach einem der Ansprüche 1 bis 9 erhalten wird, **dadurch gekennzeichnet, dass**:
- die erste Version des Fahrzeugs (1) eine Karosserieseite (6), aufweisend eine Vertiefung (10) und eine Scheibe (9) des Seitenfensters (5) umfasst, die mittels einer Dichtung (13) an einem Bereich des Falzes (12) der Vertiefung (10) montiert ist, so dass die Scheibe (13) bündig mit der Karosserieseite (6) abschließt, und dass
- die zweite Version des Fahrzeugs die gleiche Karosserieseite (6) wie die erste Version des Fahrzeugs umfasst, wobei die kleinere Scheibe (9) des Seitenfensters (5) mittels der Dichtung (10) an einem anderen, tiefer gelegenen Bereich des Falzes (12) der Vertiefung (10) montiert ist, sodass die Scheibe (9) bündig mit der Karosserieseite (6) abschließt, wobei eine verchromte Zierblende (18) an dem Falz (12) in Verlängerung der Scheibe (9) so befestigt ist, dass sie bündig mit der Karosserieseite (6) abschließt, wobei die Zierblende (18) zwischen der Scheibe (9) des Seitenfensters (5) und der oberen Wand (12) der Vertiefung (10) eingesetzt ist.

## Claims

1. Method for transforming a first version of a vehicle (1) into a second version, said vehicle (1) comprising a bodyshell side (6) having an indentation (10) delimited by a rebate (12) embodying a bottom of the indentation (10) and by an upper wall (11) embodying a depth of said indentation (10), in the first version the vehicle (1) comprising a quarterlight (5) glass (9) mounted on a zone of the rebate (12) of the indentation (10) by means of a seal (13), such that the glass (9) is flush with the bodyshell side (6), **characterized in that** it comprises the following steps:
- a step of mounting the quarterlight (5) glass (9) on another zone of the rebate (12) by means of the seal (13), such that the glass (9) is further from the upper wall (11) than it was in the first version, and such that said glass (9) is flush with the bodyshell side (6),
- a step of providing a chrome-plated trim (18),
- a step of fastening the chrome-plated trim (18) to the rebate (12) in a space between the glass (9) and the upper wall (11) of the indentation (10), such that said trim (18) is flush with the bodyshell side (6).

2. Transformation method according to Claim 1, **characterized in that** it comprises a step of lengthening the rebate (12) so as to make it possible to move the zone of fastening of the glass (9) to the rebate (12) by means of the seal (13) away from the upper wall (11) of the indentation (10).

3. Transformation method according to either one of Claims 1 and 2, **characterized in that** the step of providing the chrome-plated trim (18) comprises a step of manufacturing a main body (19) and a step of coating said body (19) with a layer (20) of chrome-plated appearance.

4. Transformation method according to Claim 3, **characterized in that** the main body (19) is made of plastic material.

5. Transformation method according to any one of Claims 1 to 4, **characterized in that** the step of fastening the chrome-plated trim (18) to the rebate (12) is performed by means of a layer of adhesive.

6. Transformation method according to Claim 5, **characterized in that** it comprises a step of fastening a plurality of clips (25) to the rebate (12), which are disposed along the trim (18), so as to secure the holding of said trim (18) and ensure that the layer of adhesive remains correctly compressed during the mounting.

7. Transformation method according to Claim 6, **characterized in that** it comprises a step of creating a plurality of cavities (26) in the chrome-plated trim (18), so as to be able to house the clips (25) that are retracted forcibly against the glass (9) of the quarterlight (5) when the trim (18) is fastened to the rebate (12).

8. Transformation method according to any one of Claims 1 to 7, **characterized in that** the step of fastening the chrome-plated trim (18) to the rebate (12) is performed while leaving a clearance between the upper wall (11) of the indentation (10) and said trim (18).

9. Transformation method according to any one of Claims 1 to 8, **characterized in that** the upper wall (11) of the indentation (10) extends in a substantially horizontal plane and the rebate (12) extends in a substantially vertical plane.

10. Assembly comprising a first version of vehicle (1) and a second version of said vehicle (1) that is obtained by means of a method in accordance with any one of Claims 1 to 9, **characterized in that**:
- the first version of the vehicle (1) comprises a bodyshell side (6) having an indentation (10) and a quarterlight (5) glass (9) mounted on a zone of the rebate (12) of the indentation (10) by means of a seal (13), such that the glass (13) is flush with the bodyshell side (6), and **in that**,
- the second version of said vehicle comprises the same bodyshell side (6) as that of the first version of the vehicle, the smaller quarterlight (5) glass (9) being mounted on another, lower zone of the rebate (12) of the indentation (10) by means of the seal (10), such that the glass (9) is flush with the bodyshell side (6), a chrome-plated trim (18) being fastened to said rebate (12) in the continuation of said glass (9) so as to be flush with the bodyshell side (6), said trim (18) being inserted between the quarterlight (5) glass (9) and the upper wall (12) of the indentation (10).
